# EUROPEAN PATENT SPECIFICATION

(11) **EP 0 676 611 B1**
(45) Date of publication and mention of the grant of the patent: **01.03.2000**
(21) Application number: 95105136.6
(22) Date of filing: 05.04.1995
(51) Int. Cl.: F41J 7/06, A63F 9/02

(54) **Method for developing attractions in a shooting game system**
Verfahren zur Entwicklung von Attraktionen in einem Schiessspielsystem
Méthode pour générer des attractions dans un jeu de tir

(30) Priority: 06.04.1994 JP 9076194
(43) Date of publication of application: 11.10.1995
(73) Proprietor: SEGA ENTERPRISES, LTD., Tokyo 144 (JP)
(72) Inventor: Ikematsu, Shinichi, Ohta-Ku, Tokyo (JP); Kawakami, Hiroshi, Ohta-Ku, Tokyo (JP); Nakano, Satoshi, Ohta-Ku, Tokyo (JP); Kouno, Tatsuya, Ohta-Ku, Tokyo (JP); Hiromi, Keisuke, Ohta-Ku, Tokyo (JP); Yoshimoto, Masakazu, Ohta-Ku, Tokyo (JP)
(74) Representative: Klunker . Schmitt-Nilson . Hirsch

(56) References cited:
- EP-A- 0 420 277
- EP-A- 0 534 712
- DE-C- 509 786
- US-A- 2 188 292
- US-A- 2 404 653
- US-A- 4 533 144
- US-A- 5 232 227
- US-A- 5 320 358
- US-A- 5 354 057
- INTERNATIONAL DEFENSE REVIEW, vol. 21, no. 11, November 1988 COINTRIN- GENEVA CH, pages 1465-1466, FROST 'PUBLIC ENEMY N0.1'

## Description

The present invention relates to a method for developing a shooting game system with which players can experience gun fights between targets and the players themselves by arranging robot-types of targets in an attraction hall.

From document EP-A1-0,420,277 a large-scale amusement system has come to be known. This known amusement system has a play zone consisting, in combination, of a plurality of game stages and includes a travel path extending through the respective game stages. At least one carrier for receiving a player or a group of players thereon and for moving along the travel path is provided, causing the player or group of players to play a game at each of the game stages. A score processor for processing the score of the player or the scores of the group of the players is provided as well as a representing device for representing the game in each of the game stages. The known large-scale amusement system provides a multi-story game by changing the game representation mode from one to another at a game stage through which the carrier is moving or will move, depending on the total carrier score one by the player or the group of players on the carrier. Since the overall structure of said known amusement system cannot be amended, no method for developing a shooting game or attractions therein has been disclosed.

A co-pending European patent application 95 105 137.4 titled "Intelligent Target for Shooting Game" has been published as EP-A-0 676 612.

Among games in which players play to shoot targets with model guns (rifles and the like) and which are arranged in playing spots, there are so-called competition-type of shooting games that robot-type of targets and players do gun fights with each other. Targets used in these competition type of shooting games only do very simple operations, although they are called robot-types. In addition, directions of guns are nearly fixed, and hence the targets shoot at fixed positions only. Therefore, according to arrangement methods of the targets, game quality remarkably changes. Accordingly, heretofore, by always arranging targets and the like with the same arrangement method in the same size of hall, game quality can be kept.

However, heretofore, in case the attraction such as the above-described competition type of shooting game is developed in a theme park (a park designed under a unified theme), stage settings, partitions, posts, and the like are incorporated as indoor facilities in a park layout design. Therefore, considerable expense is paid every installation in an attraction hall. In addition, the higher the game quality is, and the higher the degree of players' participation is, the more adjustment or the gave quality becomes difficult. Therefore, even if veteran engineers on a system install targets and relating equipment in the system, much adjustment time is necessary. Owing to this, the period from the start of building to open of the park is long. Further, in case several attractions should be developed in the same time, many attraction-specific engineers should be trained. These problems are reasons why few attractions in theme parks have high degrees of players' participation and high game quality.

The present invention is intended as a solution to the aforesaid problems. A first object of tha present invention is to provide a method for developing a shooting game system with which the shooting game system can be easily installed in a short period anywhere. Further, a second object of the present invention is to provide a method for developing a shooting game system with which game quality can be always set in the most suitable state.

These objects are solved according to the invention by a method for developing a shooting game system having the features as set out with claim 1. Dependent claims 2 to 6 exhibit further improvements.

In the accompanying drawings:
FIG.1 is a schematic diagram showing en example of an entire constitution of a shooting game system;
FIG.2 is a flow chart for explaining a method for developing a shooting game system;
FIG.3 is a structural diagram showing a first concrete example of a target assembled with a method for developing a shooting game system;
FIG.4 is a structural diagram showing a second concrete example of a target assembled with a method for developing a shooting game system;
FIG.5 is a flow chart for explaining an embodiment of a method according to the present invention;
FIGs.6A, 6B and 6C are drawings for explaining the second embodiment of a method according to the present invention; and
FIG.7 is a flow chart for explaining an outline of simulation processing in FIG.5.

Target units are constructed with fundamental mechanisms and control equipment, and the constructed target units are installed into target unit cases respectively to be installed in an attraction hall. In addition, the target unit cases are formed to serve also as partitions and posts in rooms. Therefore, various types of targets can be easily produced, and plenty of targets can be easily installed in a short period anywhere.

In addition, arrangement information of targets is inputted to a control system of a shooting game system, and is saved in memory means. Therefore, in case of executing the shooting game system, the operation of the targets can be controlled with the control system of the shooting game system, based on the arrangement information of the targets, and hence the game quality can be automatically adjusted to some extent. Furthermore, it is possible to display the arrangement state of targets on a monitor display, and further to simulate the shooting game on a screen. Therefore, if environment such as arrangement has a problem, it is easily confirmed, and hence game quality can be set in a most suitable state.

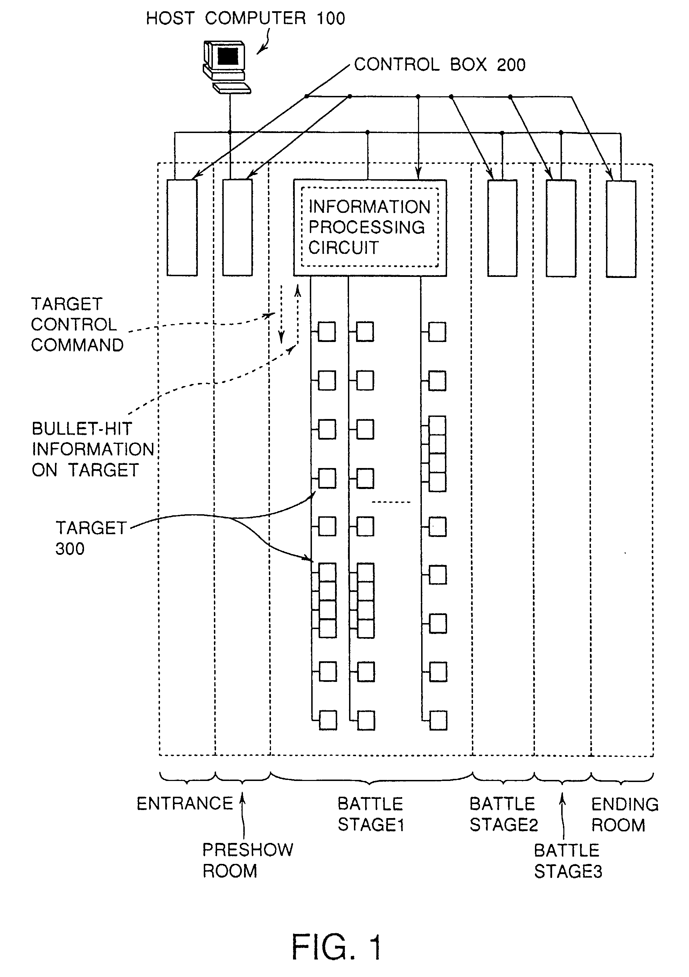

Since FIG.1 is a schematic diagram showing an example of an entire constitution of a shooting game system. First, the outline of the entire system will be described with reference to FIG.1. A room for a shooting game that is provided in an amusement facility is partitioned into a plurality of rooms: an entrance where reception for the game, explanation of the game with a large monitor display for guidance. delivery of guns, and the like are done: a preshow room for preparing the game; battle stages 1 to 3 where gun fights with targets are played; and an ending room where players receive personal results or team results. Therefore, each player or each team composed of a plurality of players plays round the rooms.

A host computer 100 controls an entire system, and a control box 200 controls each room. The host computer 100 is connected to the control box 200 for each room via optical communication, executes the centralized control of the entire system such as flow of players, start/stop of the game, data acquisition, totaling, and reporting, and controls progress of the game. The control box 200 is a single frame from a hardware point of view, is commonly used for rooms, and controls a subsystem in each room by commands from the host computer 100.

Here, only the control in the battle stages according to the present invention will be explained. In the battle stages 1 to 3, the control box 200 transmits target control commands to the targets 300 via optical communication, and mainly controls many targets 300 (control of appearance, aiming, shooting, and the like). Each target 300 received the target control command follows the command: the target appears from the back of a post; it aims a player with a gun; or it attacks the player. Each target 300 has means for detecting bullet hitting and means for detecting players positions, detected information on bullet-hit targets and on players' positions is transmitted to the control box 200 via optical communication. In this manner, in the battle stages 1 to 3, on the basis of predetermined information, the command information from the host computer 100, and the dynamic information sent from each target 300 as above-described, the control box 200 controls various operations of each target 300.

In a shooting game system like that in Fig. 1, many robot types of targets are installed in a play hall. In case these types of attractions are developed in a theme park, according to a conventional method for developing a shooting game system, considerable expense is required and a period from the building start to park opening is long. By exemplifying a shooting game system in the above-described system configuration, a method for developing a shooting game system will be explained below.

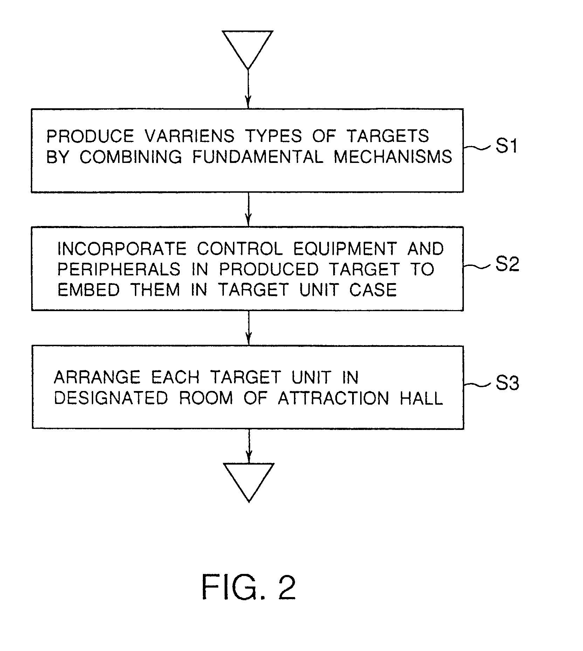

FIG.2 is a flow chart showing a procedure of a first method for developing a shooting game system and shows a procedure until installation of targets in an attraction hall. According to the flow chart of FIG.2, first of all, in a production process of targets, various operation types of targets are produced by combining fundamental mechanisms. Namely, the more robot-types of targets are, the more contents of a game system are well filled, while design and production per robot type need much labor and time. Therefore, by combining fundamental mechanisms that have unit operations such as vertical movement, horizontal movement, tilting, and rotation, and are produced beforehand, various operation types of targets are produced (Step S1).

In addition, control equipment and peripherals are incorporated in the produced targets to make them a target unit, which are embedded in a target unit case. The target unit case is formed beforehand to serve also as an indoor partition and posts. There are various types of targets such as a type that usually hides in the back of a post, appears for attacking, and hides again, a type that appears when a player approaches, and the like. Therefore, in order that the target unit case itself can be installed without foundation work such as partitioning, the target unit case is formed beforehand to serve also as a partition and posts.

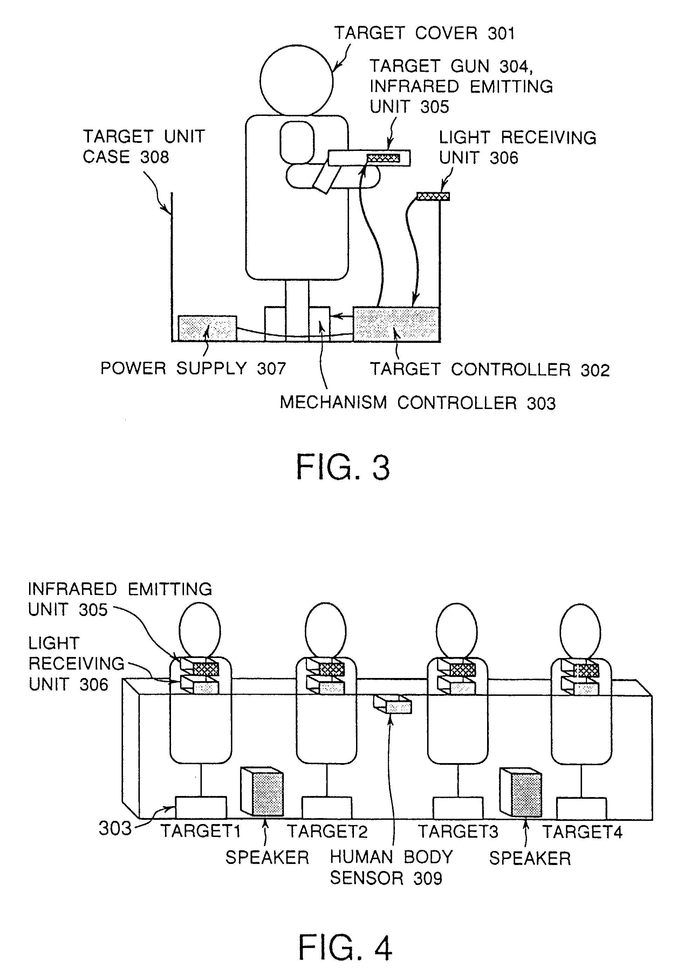

FIG.3 is a structural diagram showing a first concrete example of a target assembled in conjunction with the above-described method. The target unit comprises: a target cover 301; a target controller 302 for controlling target operations and output of sound effects; a mechanism controller 303 for controlling operation mechanisms of the target by a command from the target controller 302; a target gun 304 that is a gun unit for the target; an infrared emitting unit 305 that emits infrared light corresponding to a bullet; a light receiving unit 306 for detecting infrared light shot (emitted) by a player; and a power supply 307. Further, these target units are incorporated in a target unit case 308.

As shown in FIG.3, all of the control equipment and peripherals are unified. A target appearance is expressed by covering the target body composed of fundamental mechanisms, which are not shown, with the target cover 301. That is, by covering the target bodies with the target covers having various appearances, targets having various appearances can be expressed. In addition, a target unit case 308 for the type of target appearing from a post has a shape of a post or a box.

FIG.4 is a structural diagram showing a second concrete example of a target assembled in conjunction with an above-described method. Namely, this is a configuration example of a target unit case that one target controller 302 controls four target units and two sound systems. In addition, in this example, since a human body sensor (pyro-electricity sensor and the like) 309 is set for detecting a player. Each target attacks the player when the sensor detects the player in the area where the target can attack the player. In this manner, by combining fundamental units, various types of targets can be assembled. As shown in an example of FIG.4, by installing a plurality of target units in a target unit case, fundamental units can be commonly used, and targets can be installed more easily in the attraction hall (Step S2).

Furthermore, by arranging target units installed in the target unit cases in the designated rooms, installation of targets is completed (Step S3). Further, although it is described that target unit cases are formed so as to serve also as partitions and posts, of course, it is possible to attach partitioning units and posts to fundamental target unit cases.

Hereinafter, an embodiment of the present invention will be described with reference to drawings.

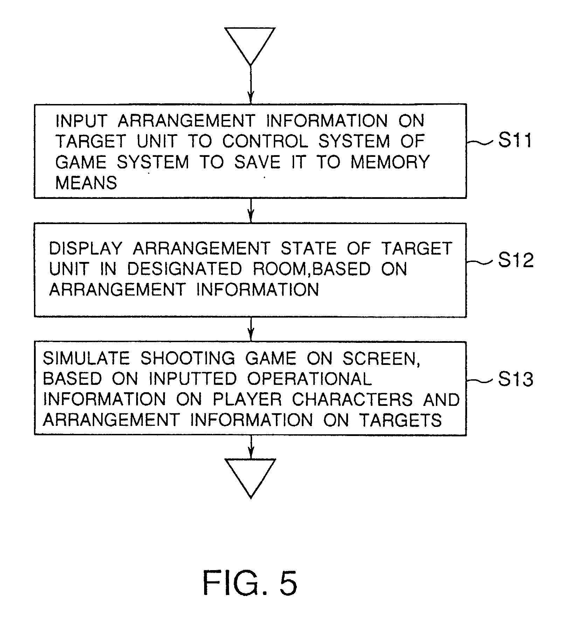

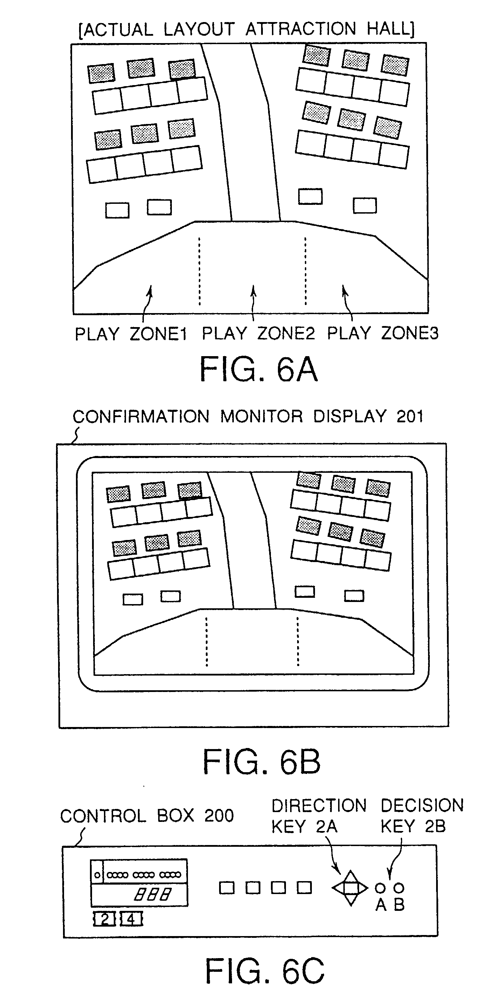

FIG.5 is a flow chart showing a procedure of an embodiment of a method for developing a shooting game system according to the present invention. FIG.5 shows a procedure from inputting arrangement information of targets to the control system to simulating the game. With reference to FIGs.6A, 6B and 6C, the embodiment will be described according to the flow chart in FIG.5. First of all, on the basis of the actual layout of an attraction hall (FIG.6A), arrangement information of target units one by one with a select key 2a (direction key) and decision keys 2b (FIG.6C). As the arrangement information, positions (three-dimensional positions) and angles of the targets in the attraction hall, the play zone where target guns aim players, and the like are inputted. The inputted arrangement information is saved in memory means of a control box 200 (Step S11).

The control box 200 follows a display instruction by an operator, and, on the basis of the inputted arrangement information, schematically displays the arrangement state of targets in the designated room on a confirmation monitor display as shown in FIG.6B. Since the target units displayed on the display have schematic shapes of actual ones, actual arrangement can be accurately recognized only by looking at the confirmation monitor display (Step S12). Further, on the basis of the arrangement information of the targets, the shooting game that is gun fights between targets and players is simulated (Step S13). In addition, the Step S12 and Step S13 are not shown as time-series, and confirmation of the arrangement state and simulation of the game can be optionally executed by operator's command.

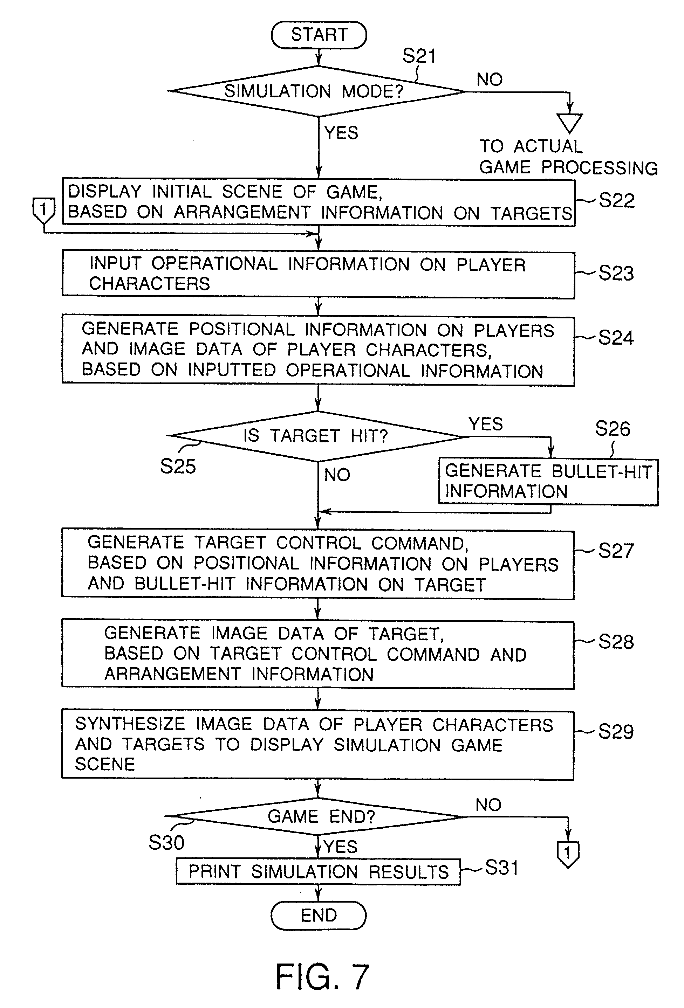

Next, according to the flow chart in FIG.7, the outline of simulation processing will be described. In an actual shooting game, the detected information on bullet-hit targets and on players' positions is transmitted to the control box 200 via optical communication, and, on the basis of arrangement information of targets and detected information on bullet-hit targets and on players' positions, various operations of each target 300 are controlled. However, in the simulation mode, the game is simulated on the basis of the same information.

In case the system mode is the simulation mode, the control box 200 displays a scene in the designated battle stage that is drawn on the basis of the arrangement information of the targets, for example, a scene shown in FIG.6B. Further, player characters corresponding to actual players are displayed on a screen (Steps S21 and S22). An operator starts a shooting game on the screen with a start command, operates movement of the player characters and handling of guns with a direction key 2a and decision keys 2b in an operation panel, and executes a simulation game. Here, operational information on the player characters can be inputted not only from the operation panel but also from common input apparatuses. Hence, on the basis of information inputted from each input apparatus, a shooting game composed of a plurality of players and targets can be simulated (Step S23).

On the basis of the inputted operational information on player characters, the control box 200 generates positional information on players and image data of player characters (Step S24), and, if a target is hit with a bullet, the control box 200 generates bullet-hit information on the target (Steps S25 and S26). In addition, on the basis of the positional information on players and the bullet-hit information on the target, the control box 200 generates a target control command (Step S27). Namely, processing at the Step S27 is the same as that in the actual game, and, as processing for simulation, the processing for displaying on a screen the result of simulating operations of players and targets is merely added to the control box 200.

Subsequently, the control box 200, on the basis of the target control command and arrangement information, generates image data of the target (Step S28), and displays a game scene by synthesizing image data of player characters and targets (Step S29). Furthermore, if the game is not completed, the process returns to the Step S23 and the control box 200 repeats above steps. If the game is completed, the control box 200 prints the simulation results and completes the processing (Steps S30 and S31). By executing the simulation as described above and looking at simulated scenes, the operator confirms the game quality. As simulation results, players' results that are outputted in the actual game are printed, and hence, by looking at these result also, the operator confirms the overall game quality.

In addition, in the above-described embodiment, as actual stage layout designed beforehand, a method for displaying an arrangement state and executing simulation is described. On the contrary, it is possible to display, first of all, a scene of a fundamental layout on a screen to arrange targets on the screen to design the layout in a battle stages to execute simulation of the game on the basis of the arrangement states and to design the most suitable arrangement in the actual stage. In that case, for example, on the basis of the layout information on the battle stage and arrangement information on the targets, a plan for the designated stage and the like can be printed.

As described above, according to a method for developing a shooting game system, by unifying a target, a partition, posts, and the like, following effects can be obtained.
1) Since operation check per unit can be done in aproduction site. reliability increases.
2) The original design and inventory control of parts become remarkably easy.
3) Installation becomes simple, and an installation period and expense can be reduced.
4) Since a failed unit can be exchanged by unit, this is advantageous in the viewpoint of business.

In addition, by displaying an arrangement state of targets on the basis of arrangement information inputted to a system, and further executing simulation of a shooting game on a screen, following effects can be obtained.
1) A game whose game quality is remarkably changed by an arrangement method of targets cannot display the same game quality unless the game system is arranged with the same method and direction. However, by inputting the arrangement information, porting of the game quality becomes remarkably easy.
2) Since the game quality can be simulated on a monitor display on the basis of the inputted arrangement information, adjustment of the game quality becomes simple, and hence a specified engineer is not required.
3) This can easily correspond to minor layout change.

## Claims

1. A method for developing a shooting game system with which players can experience gun fights between targets (301-308) and the players themselves by arranging robot-types of said targets (301-308) in an attraction hall, the method for developing a shooting game system comprising the steps of:
a) inputting (S11) arrangement information on the targets (301-308) which are arranged in a designated room of said attraction hall, to a control system of said shooting game system to save the information in memory means;
b) displaying (S12) arrangement state of said targets (301-308) on a monitor display on the basis of the arrangement information saved in said memory means so that the arrangement state in said designated room can be confirmed on said monitor display; and
c) simulating (S13) a shooting game, which is the gun fights between said targets (301-308) and players, on the basis of inputted operational information on player characters and the arrangement information on the targets (301-308) saved in said memory means so that game quality in said arrangement can be examined.

2. A method for developing a shooting game system according to claim 1, wherein said arrangement information is inputted from a control box (200) and comprises three-dimensional positions and angles of targets (301-308) and play zones, where target guns aim players, in a stage.

3. A method for developing a shooting game system according to claim 1 or 2, wherein confirmation of said arrangement state and simulation of a game can be selected by an external instruction.

4. A method for developing a shooting game system according to claim 3, wherein in case said simulation is selected, player characters corresponding to actual players are displayed on a screen, a game of targets vs players on a screen is started, and movement of said player characters and handling of guns are operated with keying.

5. A method for developing a shooting game system according to claim 4, wherein, on the basis of said inputted operational information on player characters, positional information on players and image data of player characters are generated, and wherein, if said target (301-308) is hit with a bullet, bullet-hit information on the target (301-308) is generated, and, on the basis of said positional information on players and the bullet-hit information on the target (301-308), a target control command is generated.

6. A method for developing a shooting game system according to claim 5, wherein on said target control command and the arrangement information, image data of the target is generated, and said player characters and said image data of the targets (301-308) are synthesized to display a game scene.

## Patentansprüche

1. Verfahren zum Entwickeln eines Schieß-Spielsystems, mit dem Spieler Schußwaffenkämpfe zwischen Zielen (301-308) und den Spielern selbst ausführen können, indem Robotertypen der Ziele (301-308) in einer Vergnügungshalle angeordnet werden, wobei das Verfahren zum Entwickeln eines Schieß-Spielsystems folgende Schritte umfaßt:
a) Eingeben (S11) einer Anordnungsinformation betreffend die Ziele (301-308), die in einem bestimmten Raum der Vergnügungshalle angeordnet sind, in ein Steuersystem des Schieß-Spielsystems, um die Information in einer Speichereinrichtung zu sichern;
b) Anzeigen (S12) des Anordnungszustands der Ziele (301-308) auf einer Monitoranzeige, basierend auf der Anordnungsinformation in der Speichereinrichtung, so daß der Anordnungszustand in dem bestimmten Raum auf der Monitoranzeige bestätigt werden kann; und
c) Simulieren (S13) eines Schießspiels, bei dem es sich um die Feuerwaffenkämpfe zwischen den Zielen (301-308) und den Spielern handelt, basierend auf der eingegebenen Betriebsinformation bezüglich Spielermerkmalen und der Anordnungsinformation bezüglich der Ziele (301-308), die in der Speichereinrichtung gesichert ist, so daß die Spielqualität in dieser Anordnung untersucht werden kann.

2. Verfahren nach Anspruch 1, bei dem die Anordnungsinformation über einen Steuerkasten (200) eingegeben wird und dreidimensionale Stellungen sowie Winkel von Zielen (301-308) sowie Spielzonen auf einer Bühne umfaßt, wohin Zielfeuerwaffen Spieler treffen.

3. Verfahren nach Anspruch 1 oder 2, bei dem eine Bestätigung des Anordnungszustands und der Simulation eines Spiels durch einen externen Befehl ausgewählt werden kann.

4. Verfahren nach Anspruch 3, bei dem bei Auswahl der Simulation Spielermerkmale entsprechend den aktuellen Spielern auf einem Bildschirm angezeigt werden, ein Spiel Ziele gegen Spieler auf einem Bildschirm gestartet wird, und die Bewegung der Spielermerkmale sowie die Handhabung von Feuerwaffen durch Tasteneingabe betrieben werden.

5. Verfahren nach Anspruch 4, bei dem auf der Grundlage der eingegebenen Betriebsinformation bezüglich Spielermerkmalen Stellungsinformation für Spieler sowie Bilddaten für Spielermerkmale generiert werden, wobei, falls das Ziel (301-308) von einer Kugel getroffen wird, Kugeltrefferinformation über das Ziel (301-308) generiert wird, und basierend auf der Stellungsinformation für Spieler und der Kugeltrefferinformation bezüglich des Ziels (301-308) ein Zielsteuerbefehl erzeugt wird.

6. Verfahren nach Anspruch 5, bei dem für den Zielsteuerbefehl und die Anordnungsinformation Bilddaten des Ziels generiert werden und die Spielermerkmale sowie die Bilddaten der Ziele (301-308) zusammengesetzt werden, um eine Spielszene darzustellen.

## Revendications

1. Méthode pour développer un système de jeu de tir selon laquelle des joueurs peuvent pratiquer des échanges de coups de feu entre des cibles (301-308) et les joueurs eux-mêmes en agençant lesdites cibles (301-308) de type robot dans un hall d'attraction, la méthode pour développer un système de jeu de tir comprenant les étapes consistant à :
a) entrer (S11) des informations d'agencement concernant les cibles (301-308) qui sont agencées dans une salle désignée dudit hall d'attraction, dans un système de contrôle dudit système de jeu de tir pour sauvegarder les informations dans des moyens de mémorisation ;
b) afficher (S12) l'état d'agencement desdites cibles (301-308) sur un écran de contrôle sur la base des informations d'agencement sauvegardées dans lesdits moyens de mémorisation, de sorte que l'état d'agencement dans ladite salle désignée puisse être confirmé sur ledit écran de contrôle ; et
c) simuler (S13) un jeu de tir, qui consiste en des échanges de coups de feu entre lesdites cibles (301-308) et les joueurs, sur la base des informations opérationnelles entrées concernant les personnages de jeu et des informations d'agencement concernant les cibles (301-308) sauvegardées dans lesdits moyens de mémorisation, de sorte que la qualité de jeu dans ledit agencement puisse être examinée.

2. Méthode pour développer un système de jeu de tir selon la revendication 1, dans laquelle lesdites informations d'agencement sont entrées à partir d'une unité de contrôle (200) et comprennent les positions tridimensionnelles et les angles des cibles (301-308) et les zones de jeu, où les armes des cibles visent les joueurs, dans une étape.

3. Méthode pour développer un système de jeu de tir selon la revendication 1 ou 2, dans laquelle la confirmation dudit état d'agencement et la simulation d'un jeu peuvent être sélectionnées par une instruction externe.

4. Méthode pour développer un système de jeu de tir selon la revendication 3, dans laquelle, dans le cas où ladite simulation est sélectionnée, des personnages de jeu correspondant aux joueurs réels sont affichés sur un écran, un jeu des cibles contre les joueurs sur un écran est démarré, et le mouvement desdits personnages de jeu et la manipulation des armes sont effectués par des entrées de touche.

5. Méthode pour développer un système de jeu de tir selon la revendication 4, dans laquelle, sur la base desdites informations opérationnelles entrées concernant les personnages de jeu, des informations de position concernant les joueurs et des données d'image des personnages de jeu sont générées, et dans laquelle, si ladite cible (301-308) est touchée par une balle, des informations d'impact de balle concernant la cible (301-308) sont générées et, sur la base desdites informations de position concernant les joueurs et des informations d'impact de balle concernant la cible (301-308), une commande de contrôle de cible est générée.

6. Méthode pour développer un système de jeu de tir selon la revendication 5, dans laquelle sur ladite commande de contrôle de cible et les informations d'agencement, des données d'image de la cible sont générées, et lesdits personnages de jeu et lesdites données d'image des cibles (301-308) sont synthétisées pour afficher une scène de jeu.
